# FASCICULE DE BREVET EUROPEEN

(11) **EP 2 137 540 B1**
(45) Date de publication et mention de la délivrance du brevet: **03.05.2017**
(21) Numéro de dépôt: 08762019.1
(22) Date de dépôt: 31.01.2008
(51) Int. Cl.: G01P 5/10, G01P 5/12, G01P 13/00, G01P 13/04

(54) **DISPOSITIF ET PROCEDE DE MESURE DE VITESSE ET DE DIRECTION D'ECOULMENT DE FLUIDE GAZEUX**
VORRICHTUNG UND VERFAHREN ZUR MESSUNG DER STRÖMUNGSGESCHWINDIGKEIT EINES GASFÖRMIGEN FLUIDS
DEVICE AND METHOD FOR MEASURING THE FLOW SPEED AND DIRECTION OF A GASEOUS FLUID

(30) Priorité: 01.02.2007 FR 0753020
(43) Date de publication de la demande: 30.12.2009
(73) Titulaire: Airbus Opérations SAS, 31060 Toulouse (FR)
(72) Inventeur: BARRE, Cyril, F-33220 Saint Philippe du Seignal (FR); DOS-REIS, Michel, F-31830 Plaisance du Touch (FR); MAGNIN, Hervé, F-31130 Flourens (FR)
(74) Mandataire: Gicquel, Olivier Yves Gérard
(86) Numéro de dépôt international: PCT/FR2008/050159
(87) Numéro de publication internationale: WO 2008/104666

(56) Documents cités:
- DD-A- 89 030
- DE-B- 1 224 546
- US-A- 3 359 794
- US-A- 3 604 261

## Description

La présente invention concerne un dispositif et un procédé de mesure de vitesse, de direction et de sens d'écoulement d'un fluide gazeux tel que l'air.

Les dispositifs et les procédés de mesure de vitesse d'écoulement d'air existants utilisent de multiples technologies. Parmi les plus répandus, on trouve les anémomètres à sonde de pression type Tube de Pitot, ceux à hélices, les anémomètres thermiques, et plus récemment les sondes à ultrasons.

La technologie du Tube de Pitot s'appuie sur une mesure de pression différentielle entre la pression totale et la pression statique d'un flux. Cette pression différentielle est proportionnelle à la pression dynamique (ΔP=α*1/2*ρ*V²) où V est la vitesse de l'écoulement gazeux. Les Tubes de Pitot sont particulièrement adaptés aux vitesses élevées même si la qualité de mesure est très sensible à la direction du flux.

Pour les dispositifs à hélice ou turbine disposés dans un écoulement d'air, la vitesse de l'écoulement est déterminée par la vitesse de rotation de l'élément rotatif. Ces dispositifs permettent d'obtenir une bonne précision de mesure pour les moyennes vitesses et lorsque l'écoulement est dirigé selon leur axe de rotation. L'usure mécanique due aux mouvements de rotation de l'hélice ainsi que la perte de charge générée sont les principaux inconvénients de ces dispositifs.

Un autre moyen connu est le dispositif à fil chaud pour lequel le procédé de mesure passe par la mesure d'un courant destiné à maintenir la température du fil refroidi par un écoulement d'air et la comparaison de la valeur de ce courant avec une valeur nominale à température donnée sans écoulement d'air.

Les anémomètres thermiques utilisent la température d'un élément sensible pouvant être régulé en courant, en température ou en différentiel de température constant. La régulation est l'image de la vitesse du flux. Ils permettent la mesure d'écoulement très faible comme les courants d'air et sont, de ce fait, bien adaptés dans les domaines de la climatisation et de la ventilation.

Un exemple d'anémomètre à température constante est donné par le document US 4 503 706;
Le dispositif à fil chaud peut être omnidirectionnel, mais ne donne dans ce cas pas d'indication sur la direction de l'écoulement d'air, ou peut être caréné pour privilégier une direction de mesure et être dans ce cas apte à mesurer un écoulement selon un secteur angulaire réduit.

Même si elles permettent pour certaines la détermination complète des caractéristiques directionnelles d'un écoulement, les différentes technologies présentées ci-dessus ne permettent bien souvent d'explorer qu'un faible secteur angulaire.

La présente invention a pour but de proposer un dispositif et un procédé de mesure d'écoulement d'un fluide tel que l'air, adaptés à réaliser une mesure de vitesse, de direction et de sens d'écoulement selon une distribution la plus large possible voire quasi sphérique.

En particulier, la présente invention permet de mesurer les trois composantes vectorielles dans l'espace d'un écoulement sur un secteur angulaire le plus large possible voire quasi sphérique, la mesure devant couvrir un angle solide le plus grand possible, et sur une gamme de température la plus étendue possible. Il s'agit d'un dispositif de sonde statique, compact de taille, de poids réduits et dépourvu de pièce en mouvement. Il est ainsi utilisable dans des espaces confinés et peut être embarquable sur aéronef.

Dans ce but la présente invention prévoit en premier lieu un dispositif de mesure d'une vitesse d'écoulement d'un fluide, de sa direction et de son sens, basé sur un principe de mesure à capteurs thermiques, caractérisé en ce qu'il comporte au moins deux sondes de mesure d'écoulement comportant chacune un élément sensible et un obstacle masquant une zone de mesure déterminée de l'élément sensible.

Plus particulièrement, les obstacles sont constitués par des éléments de masquage d'un secteur angulaire des sondes de mesure d'écoulement en regard de l'élément sensible desdites sondes.

Selon un mode de réalisation avantageux de l'invention, le dispositif de mesure comporte une enveloppe sphérique et les sondes de mesure d'écoulement sont disposées sur au moins une ligne génératrice circulaire de l'enveloppe du dispositif de mesure et couvrent des secteurs angulaires complémentaires.

Plus particulièrement, les sondes de mesure d'écoulement sont situées sur le plan équatorial du dispositif de mesure.

Le dispositif peut notamment comporter quatre sondes de mesure d'écoulement disposées à 90° les unes des autres sur une ligne génératrice circulaire commune pour définir quatre points cardinaux.

Selon une première alternative, le dispositif comporte six sondes de mesure d'écoulement disposées à 60° les unes des autres sur une ligne génératrice circulaire pour réaliser au moins deux secteurs de mesure au vent de l'écoulement et deux secteurs de mesure sous le vent de l'écoulement.

Selon une deuxième alternative, le dispositif comporte quatre capteurs sur l'équateur de l'enveloppe du dispositif et quatre capteurs sur au moins un tropique de l'enveloppe.

Selon un mode de réalisation particulier, les éléments de masquage sont disposés à l'extérieur d'un cercle défini par la ou les lignes génératrices circulaires.

Avantageusement, le dispositif comporte en outre des sondes de mesure disposées sur l'axe polaire de l'enveloppe.

Selon un mode de réalisation particulier, les sondes de mesure d'écoulement sont fixées sur des mats porteurs et les mats porteurs constituent préférablement lesdits obstacles.

Selon l'invention, les mats porteurs peuvent être constitués par des segments d'anneaux distribués selon des méridiens équidistants du volume sphérique défini par l'enveloppe du dispositif.

Dans ce cadre et selon un mode de réalisation particulier, les sondes de mesure d'écoulement sont disposées sur des mats porteurs en forme d'anneaux polaires définissant un volume sphérique, les sondes étant disposées à l'intérieur des anneaux sur la ligne équatoriale du volume sphérique.

Toujours selon l'invention, le dispositif peut être tel que les éléments sensibles sont disposées sur une boule constituant un obstacle commun pour l'ensemble desdites sondes de mesure d'écoulement.

Selon un mode de réalisation particulier, le dispositif comporte un capteur de pression et de température afin de compenser les mesures.

Dans le cadre de l'invention, les capteurs sont en particulier des sondes à éléments sensibles thermiques résistifs, régulées en courant, en température ou en différentiel de température constant.

L'invention concerne en outre un procédé de mesure des caractéristiques de direction, sens et vitesse d'un écoulement de fluide gazeux au moyen du dispositif de l'invention, le procédé comportant une étape de comparaison des réponses des capteurs de sondes de mesure d'écoulement par un calculateur afin d'évaluer simultanément les trois composantes vectorielles de la vitesse d'écoulement selon un secteur angulaire le plus large possible.

Le procédé est notamment tel que l'ensemble des mesures réalisées par les dispositifs de mesure de potentiel sont numérisées et transmises à un calculateur qui compare les valeurs émises par les capteurs.

Plus particulièrement, sur la base d'un isolement des capteurs, le procédé est tel qu'on choisit les capteurs sur lesquels on procède à la mesure de vitesse d'écoulement.

Plus particulièrement, les capteurs étant des thermistances, le procédé de l'invention est tel qu'on détermine deux composantes de la vitesse d'écoulement par la recherche de la thermistance dont la température est la plus élevée.

Avantageusement, la détermination théorique des caractéristiques de l'écoulement fait intervenir un ou plusieurs algorithmes de calculs (sens, direction et module) à partir des réponses données par les sondes de mesure.

Le procédé est tel qu'on peut déterminer l'angle d'incidence du courant d'air sur le dispositif au moyen d'une partie de calcul qui contient une table de données en fonction des incidences par comparaison des informations données par les capteurs avec la table des données enregistrées.

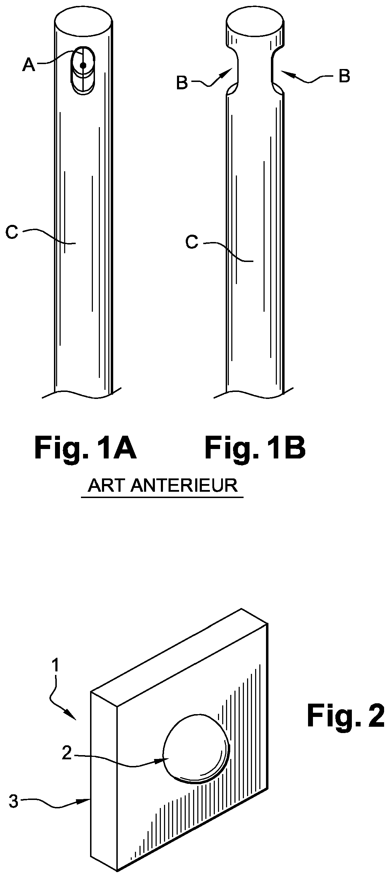

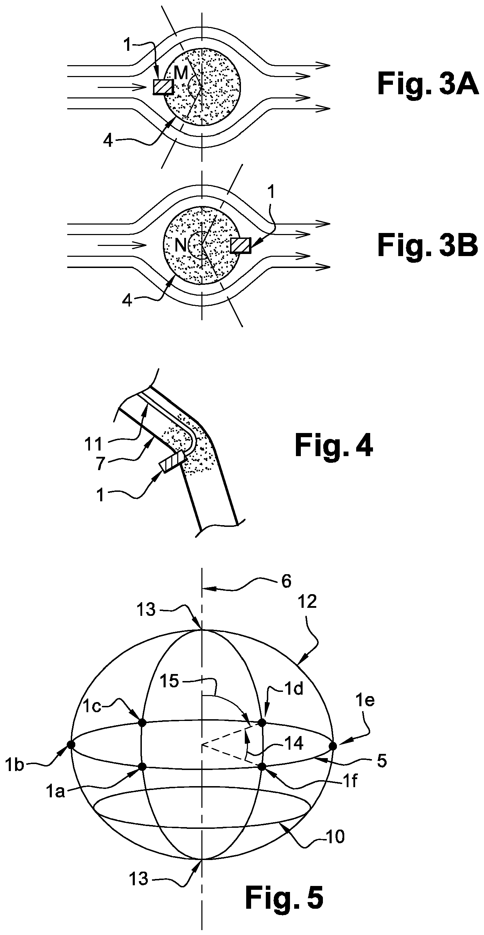

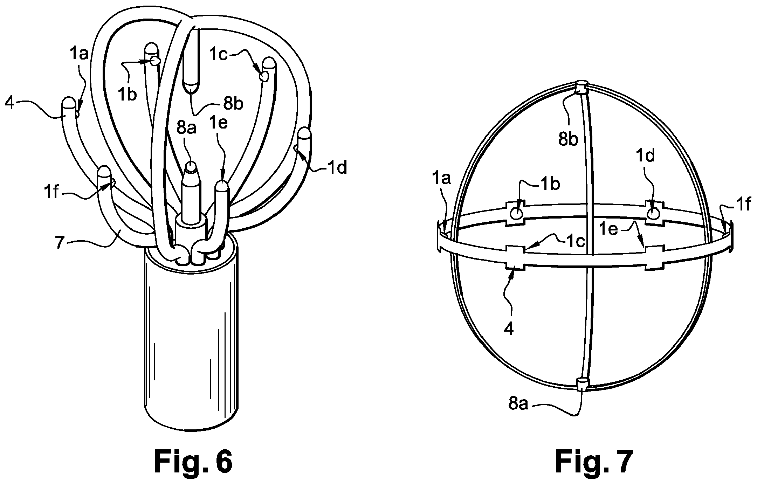

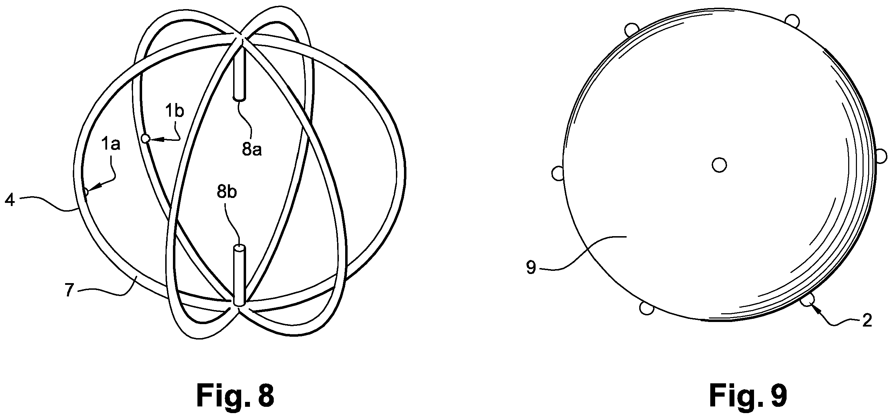

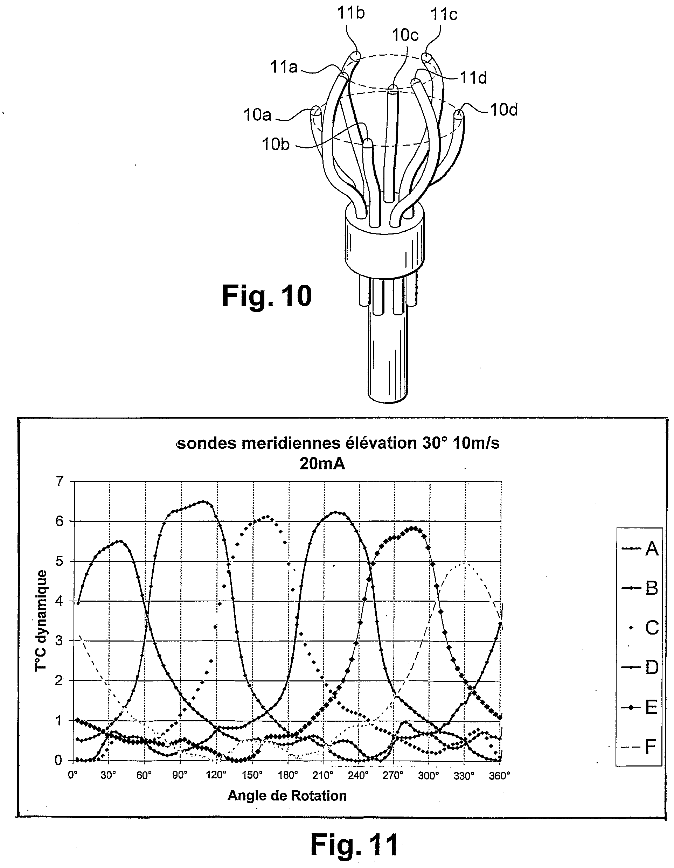

D'autres caractéristiques et avantages du dispositif et du procédé de mesure selon l'invention ressortiront à la lecture de la description qui va suivre d'exemples de réalisations non limitatifs de l'invention accompagnés des dessins qui représentent:
aux figures 1A et 1B: un exemple de sonde de vitesse à fil chaud en vues en perspective de face et de côté;
en figure 2: une vue en perspective d'un élément sensible de sonde de mesure et d'un exemple d'obstacle de l'invention;
aux figures 3A et 3B : deux vues de dessus en coupe d'une configuration de capteur et d'obstacle de l'invention dans des écoulements d'air;
en figure 4: une vue schématique en coupe d'un détail de positionnement d'une sonde de mesure d'écoulement de l'invention;
en figure 5 : une vue en perspective schématique d'un dispositif de mesure selon un premier exemple de configuration;
aux figures 6, 7, 8 et 10: des vues en perspective de quatre exemples de réalisation de dispositifs selon l'invention; en figure 9 un exemple qui ne fait pas partie de l'invention en figure 11: des courbes de mesure issues du dispositif de la figure 6.

Les figures 1A et 1B illustrent un dispositif de mesure d'une vitesse d'écoulement d'air à fil chaud de l'art antérieur caréné pour privilégier une direction de mesure.

Dans ce dispositif, le capteur à fil chaud A comportant une thermistance est disposé dans un tube C pourvu de deux ouvertures B symétriques par rapport à l'axe du tube.

Comme expliqué ci-dessus, un tel dispositif n'est dans ce cas apte à mesurer un écoulement que selon un secteur angulaire réduit correspondant grosso-modo à l'axe des ouvertures B.

Le dispositif de mesure d'une vitesse, d'une direction et d'un sens d'écoulement d'un fluide selon l'invention, basé sur un principe de mesure à capteurs thermiques, comporte au moins trois sondes de mesure d'écoulement intégrant chacune un élément sensible 2 et un obstacle 3 masquant une zone de mesure de l'élément sensible comme représenté en figure 2.

Le principe de la détermination du sens et de la direction du flux d'air selon le dispositif de l'invention réside sur le masquage partiel de chaque thermistance du dispositif.

La détermination du sens et de la direction du flux d'air selon le dispositif de l'invention réside ainsi dans le principe de rendre directionnelle, par leur agencement spatial, une combinaison d'éléments sensibles.

La sensibilité directionnelle de ces éléments est rendue possible par la présence d'obstacles pouvant être de diverses natures. Un obstacle solide placé dans un flux joue le rôle de point d'arrêt où V=0 au point d'impact, et forme un sillage derrière lui où les caractéristiques de l'écoulement, et notamment la vitesse, sont modifiées. Une peinture isolante peut également être appliquée directement sur l'élément sensible et masquer ainsi un secteur de mesure.

Le dispositif selon l'invention est ainsi adapté à mesurer les trois composantes vectorielles de la vitesse d'un écoulement sur un large secteur angulaire et une large gamme de température.

Il peut être utilisé pour des essais en vol sur aéronef et permet du fait de sa compacité de mesurer des écoulements dans des zones difficilement accessibles comme par exemple les zones de raccordement des volets à la voilure.

Une représentation de l'écoulement pour un élément sensible est donnée aux figures 3A et 3B. La figure 3A correspond à un écoulement dirigé vers l'élément sensible et la figure 3B à un écoulement pour lequel l'élément sensible est masqué par l'obstacle.

La plage de mesure de l'élément sensible correspond au secteur défini par l'angle M sur la figure 3A alors que la plage de masquage correspond au secteur défini par l'angle N à la figure 3B.

Les obstacles 3 constituent des éléments de masquage 4 d'un secteur angulaire des sondes de mesure d'écoulement en regard de l'élément sensible desdites sondes.

Ainsi, selon la direction du flux gazeux dont on souhaite mesurer les propriétés, chaque élément sensible subit d'une manière différente les influences de ce flux.

Les éléments sensibles sont orientés de telle manière que la combinaison de l'ensemble des réponses de chaque capteur permet d'évaluer simultanément les trois composantes vectorielles de la vitesse de l'air sur un large secteur angulaire et une large gamme de température.

Le module de la vitesse est, quant à lui, évalué grâce à une sonde pouvant, dans certains modes de réalisation, être omnidirectionnelle.

La détermination théorique des caractéristiques de l'écoulement peut faire intervenir un ou plusieurs algorithmes de calculs pour le sens, la direction et la vitesse de l'écoulement, à partir des réponses données par les sondes de mesure.

Cette opération de détermination de l'angle d'incidence du flux d'air sur le dispositif peut aussi se faire à partir d'une table de données en fonction des incidences.

Cette table est renseignée lors d'une phase d'étalonnage de chaque capteur qui consiste à placer le dispositif en soufflerie et à balayer l'ensemble des incidences en trois dimensions avec un certain pas.

La détermination de l'angle d'incidence se fait ensuite par comparaison des informations données par les thermistances avec la table de données enregistrée.

Plusieurs modes de réalisation de la présente invention sont envisageables. Les critères géométriques et les technologies associées peuvent évoluer en conséquence selon la solution retenue.

Selon la figure 5, les sondes de mesure d'écoulement 1a, ..., 1f sont disposées sur une ligne génératrice circulaire commune 5 et couvrent des secteurs angulaires complémentaires.

Selon un premier mode de réalisation, le dispositif peut comporter quatre sondes de mesure d'écoulement disposées à 90° les unes des autres sur la ligne génératrice circulaire 5 pour définir quatre points cardinaux et 2 sondes polaires 8a et 8b sont situées aux pôles 13. Comme représenté aux figures 5, 6, 7 et 8, le dispositif comporte préférablement six sondes 1a, ..., 1f de mesure d'écoulement disposées à 60° les unes des autres toujours sur la ligne génératrice circulaire 5 pour réaliser au moins deux secteurs de mesure au vent de l'écoulement et deux secteurs de mesure sous le vent de l'écoulement. Une telle configuration permet en outre un recouvrement des zones de mesure afin d'éviter l'existence de zones aveugles.

Comme représenté en figure 4, les sondes de mesure d'écoulement 1 sont fixées sur des mats porteurs 7 jouant le rôle d'obstacle au flux. Ces mats sont avantageusement constitués par un tube dans lequel passent les câbles 11 d'alimentation. Les éléments sensibles sont insérés dans des trous réalisés dans les mats porteurs 7 et dépassent de ces mats d'une distance adaptée afin d'optimiser son secteur de masquage.

Les mats porteurs sont par exemple des tubes de 1mm de diamètre, le dispositif devant être d'un diamètre de l'ordre de 25 mm au total.

Selon l'exemple de la figure 6, les mats porteurs 7 sont constitués par des segments d'anneaux distribués selon des méridiens 12 équidistants d'un volume sphérique. La sonde 8a est indépendante et la sonde 8b est supportée par un trièdre.

L'exemple de la figure 7 est un dispositif comportant un support annulaire équatorial sur lequel sont fixés les capteurs des sondes de mesure d'écoulement et pour lequel les sondes 8a et 8b sont disposées à proximité des pôles 13 d'un même cerclage polaire.

Selon la figure 8, les sondes de mesure d'écoulement 1a, ..., 1f sont disposées sur des mats porteurs en forme d'anneaux polaires définissant un volume sphérique, les sondes étant disposées à l'intérieur des anneaux sur une ligne d'équateur du volume sphérique.

L'exemple de la figure 9 est une réalisation qui ne fait pas partie de l'invention, pour laquelle les éléments sensibles 2 sont disposées sur une boule 9 constituant un obstacle commun pour l'ensemble desdites sondes de mesure d'écoulement. Cet exemple nécessite un plus grand nombre de capteurs du fait que le volume de la boule constitue un obstacle de grande taille limitant encore plus la zone de mesure des capteurs.

L'exemple de la figure 10 est une réalisation pour laquelle une série de 4 capteurs 10a à 10d sont disposés sur le cercle équatorial de l'enveloppe sphérique définissant le volume du dispositif alors que quatre autres capteurs 11a à 11d sont disposés sur un tropique 10 de ladite enveloppe. Cette réalisation ne nécessite pas de sondes polaires.

Quelque soit le mode de réalisation, le nombre d'éléments de mesure est fonction de la précision et de la sensibilité souhaitées.

Les sondes de mesure sont, de manière préférentielle, des éléments appelés résistifs où la résistance interne de l'élément varie en fonction de sa température. Les CTN, CTP (thermistance à coefficient de température négatif ou positif), PT100, PT1000 en sont des exemples non limitatifs.

Pour réaliser la mesure de l'écoulement, les capteurs sont reliés à un dispositif d'alimentation pouvant être de différentes natures. Pour une alimentation à courant constant, le flux d'air, selon son intensité, abaisse plus ou moins la température de l'élément sensible aux bornes duquel on mesure le potentiel.

Pour un fonctionnement à température constante, la résistance de chaque élément sensible est maintenue constante par un asservissement en courant. Cette régulation est proportionnelle à la vitesse d'écoulement.

Enfin, on peut alimenter le dispositif afin d'obtenir un différentiel de température constant entre l'élément de mesure et l'ambiance grâce à une sonde de compensation associée.

Le dispositif préférentiel schématisé à la figure 5 est représenté en figure 6 et est décrit plus en détail ci-dessous.

Tous les éléments sensibles sont alimentés en courant constant. La température et donc la résistance interne de ces éléments varient suivant l'exposition au flux. La mesure est faite par un relevé de potentiel aux bornes de ces éléments résistifs. Il est également possible d'ajuster le courant injecté selon la température ambiante de fonctionnement. Typiquement, le courant distribué augmente avec la température ambiante.

Les sondes 1a,...,1f, dites méridiennes, permettent d'évaluer avant tout l'angle de rotation 14 selon l'axe polaire 6 de la sonde, comme représenté en figure 5. Elles pourront également être exploitées en supplément des sondes 8a et 8b disposées sur un axe polaire repéré 6 sur la figure 5 afin de compléter les informations sur la direction de l'écoulement en donnant son inclinaison ou élévation 15 par rapport au plan équatorial 5 du dispositif.

Les terminaisons libres des mats porteurs sont enrobées pour limiter les perturbations de l'écoulement qu'elles génèrent à proximité des sondes de mesure d'écoulement.

La méthode de détermination est basée sur un principe de comparaison des réponses de chaque élément sensible qui sont dans ce cas des CTN.

Lorsque le flux d'air attaque le dispositif, les CTN situées face au flux sont plus refroidies que celles situées derrière un obstacle tel que les mâts porteurs. La mesure des valeurs données par les sondes permet de remonter de manière bijective à la direction du flux d'air arrivant sur la sonde selon que les CTN soient plus ou moins cachées par un obstacle.

Pour réaliser la mesure d'écoulement, les CTN sont reliées à un dispositif de mesure comportant un générateur de courant constant par CTN et un dispositif de mesure du potentiel électrique aux bornes de chacune.

L'ensemble des mesures réalisées par les dispositifs sont numérisées et transmises à un calculateur qui analyse ces données.

Cette opération de détermination de l'angle d'incidence du courant d'air sur le dispositif peut aussi se faire par une partie de calcul contenant une table de données en fonction des incidences.

Cette table est renseignée lors d'une phase d'étalonnage de chaque capteur qui consiste à placer le dispositif en soufflerie et à balayer l'ensemble des incidences en trois dimensions avec un certain pas.

La détermination de l'angle d'incidence se fait ensuite par comparaison des informations données par les thermistances avec la table de données enregistrée.

Un exemple de courbe de réponse des CTN méridiennes 1a,...,1f du dispositif à 6 sondes méridiennes de la figure 6 est représenté en figure 11 en fonction de la direction d'écoulement. Le graphique représente les réponses en température des 6 CTN méridiennes sur une rotation complète pour un angle d'élévation et une vitesse donnée, ici 30° et 10 m.s⁻¹. Cette courbe est utilisée pour la détermination de l'angle de rotation 14 du flux.

Pour cela, on recherche parmi les relevés de température des 6 CTN méridiennes, à une position angulaire fixe, la CTN la plus chaude. Après avoir isolé les capteurs sur lesquels se feront les calculs, un algorithme est développé pour déterminer l'angle de rotation.

L'angle d'élévation 15 est évalué par un algorithme appliqué essentiellement aux réponses des sondes polaires 8a et 8b. Les données apportées pas les sondes méridiennes peuvent compléter ces informations.

Le module de la vitesse est déterminé grâce à une sonde pouvant, dans certains modes de réalisation, être omnidirectionnelle.

La précision attendue est de l'ordre de ±10% sur le module de la vitesse, ±15° sur l'angle de rotation et ±30° sur l'angle d'élévation. La rotation est couverte sur 360° tandis que la plage d'élévation se situe entre 0° et 120°, soit un angle solide de 3π.

Le dispositif peut comporter en complément un capteur de pression absolue ainsi qu'un capteur de température. En effet, les propriétés du fluide gazeux telles que la masse volumique ou le coefficient de transfert convectif par exemple, dépendent de ces grandeurs physiques et influencent les résultats. Il faut donc prendre en compte les évolutions des conditions ambiantes afin de compenser les mesures.

L'invention ne se limite pas aux exemples représentés. De même, une configuration pour laquelle les capteurs sont organisés différemment et notamment pour laquelle quatre premiers capteurs sont disposés sur un premier tropique et quatre seconds capteurs sont disposés sur un second tropique reste dans le cadre de la présente invention.

## Revendications

1. Dispositif de mesure d'une vitesse d'écoulement d'un fluide, de sa direction et de son sens, basé sur un principe de mesure à capteurs thermiques, pourvu de au moins trois sondes de mesure d'écoulement (1, 1a, ... , 1f) comportant chacune un élément sensible (2) et un obstacle (3) masquant une zone de mesure déterminée de l'élément sensible, **caractérisé en ce que** les sondes de mesure d'écoulement sont fixées sur des mats porteurs (7), les mats porteurs (7) constituant lesdits obstacles (2) formant des éléments de masquage (4) d'un secteur angulaire des sondes de mesure d'écoulement en regard de l'élément sensible desdites sondes, pour lequel au moins certaines des sondes de mesure d'écoulement (1a, ... , 1f) sont disposées sur une ligne circulaire (5) et couvrent des secteurs angulaires complémentaires.

2. Dispositif selon la revendication 1 pour lequel ladite ligne circulaire forme une génératrice d'une enveloppe sphérique du dispositif de mesure et définit un plan équatorial du dispositif de mesure.

3. Dispositif selon la revendication 2 pour lequel les éléments de masquage (4) sont disposés côté extérieur de ladite enveloppe et les éléments sensibles sont disposés côté intérieur de ladite enveloppe.

4. Dispositif selon la revendication 1, 2 ou 3 **caractérisé en ce qu'**il comporte quatre sondes de mesure d'écoulement disposées à 90° les unes des autres sur ladite ligne circulaire (5) pour définir quatre points cardinaux.

5. Dispositif selon la revendication 1, 2 ou 3 **caractérisé en ce qu'**il comporte six sondes de mesure d'écoulement disposées à 60° les unes des autres sur ladite ligne circulaire (5) pour réaliser au moins deux secteurs de mesure au vent de l'écoulement et deux secteurs de mesure sous le vent de l'écoulement.

6. Dispositif selon la revendication 2 **caractérisé en ce qu'**il comporte quatre capteurs sur ladite génératrice formant ledit plan équatorial du dispositif et quatre capteurs sur au moins un tropique de l'enveloppe.

7. Dispositif selon la revendication 2 ou 3-6 lorsqu'elle dépend de la revendication 2, **caractérisé en ce qu'**il comporte en outre des sondes de mesure (8a, 8b) disposées sur un axe polaire de l'enveloppe, ladite génératrice définissant un plan équatorial du dispositif de mesure.

8. Dispositif selon la revendication 2 ou 3-7 lorsqu'elle dépend de la revendication 2, pour lequel les mats porteurs (7) sont constitués par des segments d'anneaux distribués selon des méridiens équidistants du volume sphérique défini par l'enveloppe du dispositif.

9. Dispositif selon l'une des revendications précédentes pour lequel les sondes de mesure d'écoulement (1a, ... , 1f) sont disposées sur des mats porteurs en forme d'anneaux polaires définissant un volume sphérique, les sondes étant disposées à l'intérieur des anneaux sur la ligne équatoriale du volume sphérique.

10. Dispositif selon l'une quelconque des revendications précédentes **caractérisé en ce qu'**il comporte un capteur de pression et de température.

11. Dispositif selon l'une des revendications précédentes pour lequel les capteurs thermiques sont des sondes à éléments sensibles thermiques résistifs, régulés en courant, en température ou en différentiel de température constant.

12. Procédé de mesure des caractéristiques de direction sens et vitesse d'un écoulement de fluide gazeux au moyen d'un dispositif selon l'une quelconque des revendications précédentes, **caractérisé en ce qu'**il comporte le renseignement d'une table de données enregistrées lors d'une phase d'étalonnage de chaque capteur consistant à placer le dispositif en soufflerie et à balayer l'ensemble des incidences en trois dimensions avec un pas donné et une étape de comparaison des réponses des capteurs de sondes de mesure d'écoulement entre elles et avec les données de la table au moyen d'un calculateur afin d'évaluer simultanément les trois composantes vectorielles de la vitesse d'écoulement.

13. Procédé selon la revendication 12, pour lequel l'ensemble des mesures réalisées par les dispositifs de mesure de potentiel sont numérisées et transmises audit calculateur qui compare les valeurs émises par les capteurs.

14. Procédé selon la revendication 12, pour lequel, les capteurs étant des thermistances, on détermine deux composantes de la vitesse d'écoulement par la recherche de la thermistance dont la température est la plus élevée.

15. Procédé selon l'une des revendications 12 à 14 pour lequel on détermine les caractéristiques de l'écoulement par un ou plusieurs algorithmes de calculs (sens, direction et module) à partir des réponses données par les sondes de mesure.

16. Procédé selon l'une des revendications 12 à 15 pour lequel on détermine l'angle d'incidence du courant d'air sur le dispositif au moyen d'une partie de calcul qui compare les informations données par les capteurs avec la table de données enregistrées.

## Patentansprüche

1. Vorrichtung zur Messung einer Strömungsgeschwindigkeit eines Fluids, seiner Richtung und seines Sinns, die auf einem Prinzip der Messung mit Wärmesensoren beruht, die mit mindestens drei Strömungsmesssonden (1, 1a,..., 1f) versehen ist, die jeweils ein empfindliches Element (2) und ein Hindernis (3) aufweisen, das einen bestimmten Messbereich des sensiblen Elements verdeckt, **dadurch gekennzeichnet, dass** die Strömungsmesssonden auf Trägermatten (7) befestigt sind, wobei die Trägermatten (7) die Hindernisse (2) bilden, die die Verdeckungselemente (4) eines Winkelsektors der Strömungsmesssonden in Bezug auf das sensible Element der Sonden bilden, wobei mindestens einige der Strömungsmesssonden (1a, ..., 1f) auf einer Kreislinie (5) angeordnet sind und komplementäre Winkelsektoren verdecken.

2. Vorrichtung nach Anspruch 1, wobei die Kreislinie eine Kante einer kugelförmigen Hülle der Messvorrichtung bildet und eine Äquatorialebene der Messvorrichtung definiert.

3. Vorrichtung nach Anspruch 2, wobei die Verdeckungselemente (4) auf der Außenseite der Hülle angeordnet sind und die sensiblen Elemente auf der Innenseite der Hülle angeordnet sind.

4. Vorrichtung nach Anspruch 1, 2 oder 3, **dadurch gekennzeichnet, dass** sie vier Strömungsmesssonden aufweist, die auf der Kreislinie (5) im Winkel von 90° zueinander angeordnet sind, um vier Kardinalpunkte zu definieren.

5. Vorrichtung nach Anspruch 1, 2 oder 3, **dadurch gekennzeichnet, dass** sie sechs Strömungsmesssonden aufweist, die auf der Kreislinie (5) im Winkel von 60° zueinander angeordnet sind, um mindestens zwei Messabschnitte gegen die Strömungsrichtung und zwei der Strömungsrichtung abgewandte Messabschnitte zu erstellen.

6. Vorrichtung nach Anspruch 2, **dadurch gekennzeichnet, dass** sie vier Sensoren auf der Kante, die die Äquatorialebene der Vorrichtung bildet, und vier Sensoren auf mindestens einem Wendekreis der Hülle aufweist.

7. Vorrichtung nach Anspruch 2 oder 3 - 6, wenn er von Anspruch 2 abhängt, **dadurch gekennzeichnet, dass** sie ferner Messsonden (8a, 8b) aufweist, die auf einer polaren Achse der Hülle angeordnet sind, wobei die Kante eine Äquatorialebene der Messvorrichtung definiert.

8. Vorrichtung nach Anspruch 2 oder 3 - 7, wenn er von Anspruch 2 abhängt, wobei die Trägermatten (7) aus Ringsegmenten gebildet sind, die nach äquidistanten Längenkreisen des kugelförmigen Volumens, das durch die Hülle der Vorrichtung definiert ist, verteilt sind.

9. Vorrichtung nach einem der vorangehenden Ansprüche, wobei die Strömungsmesssonden (1a, ..., 1f) auf den Trägermatten in Form von polaren Ringen angeordnet sind, die ein kugelförmiges Volumen definieren, wobei die Sonden im Inneren der Ringe auf der Äquatorlinie des kugelförmigen Volumens angeordnet sind.

10. Vorrichtung nach einem der vorangehenden Ansprüche, **dadurch gekennzeichnet, dass** sie einen Druck- und Temperatursensor aufweist.

11. Vorrichtung nach einem der vorangehenden Ansprüche, wobei die Wärmesensoren Sonden mit sensiblen Wärmewiderstandselementen sind, die strömungsgeregelt, temperaturgeregelt oder auf konstanter Temperaturdifferenz geregelt sind.

12. Verfahren zur Messung der Eigenschaften von Richtung, Sinn und Geschwindigkeit einer Strömung eines gasförmigen Fluids mit Hilfe einer Vorrichtung nach einem der vorangehenden Ansprüche, **dadurch gekennzeichnet, dass** es das Konsultieren einer Tabelle von Daten, die während einer Phase des Kalibrierens jedes Sensors aufgezeichnet worden sind, die darin besteht, die Vorrichtung in einem Windkanal anzuordnen und die Gesamtheit der Anstellwinkel in drei Dimensionen mit einer bestimmten Steigung abzutasten, und einen Schritt des Vergleichens der Antworten der Sensoren von Strömungsmesssonden untereinander und mit den Daten der Tabelle mittels eines Rechner, um gleichzeitig zu bewerten, die drei Vektorkomponenten der Strömungsgeschwindigkeit.

13. Verfahren nach Anspruch 12, wobei die Gesamtheit der Messungen, die durch die Potentialmessvorrichtungen durchgeführt werden, digitalisiert und an den Rechner übertragen wird, der die Werte vergleicht, die von den Sensoren abgegeben werden.

14. Verfahren nach Anspruch 12, wobei, wenn die Sensoren Thermistoren sind, zwei Komponenten der Strömungsgeschwindigkeit durch das Suchen des Thermistors, dessen Temperatur die höchste ist, bestimmt werden.

15. Verfahren nach einem der Ansprüche 12 bis 14, wobei die Eigenschaften der Strömung durch einen oder mehrere Berechnungsalgorithmen (Sinn, Richtung und Modul) ausgehend von den Antworten, die von Messsonden gegeben werden, bestimmt werden.

16. Verfahren nach einem der Ansprüche 12 bis 15, wobei der Einfallswinkel des Luftstroms auf die Vorrichtung mittels eines Berechnungsteils bestimmt wird, der die Informationen, die von den Sensoren gegeben werden, mit der Tabelle der aufgezeichneten Daten vergleicht.

## Claims

1. Device for measuring a flow speed of a fluid, its direction and its sign, based on a heat-sensor measurement principle, said device being provided with at least three probes for measuring flow (1, 1a,..., 1f) each including a sensitive element (2) and an obstacle (3) masking a determined measuring zone of the sensitive element, **characterized in that** the flow-measuring probes are fastened to carrier masts (7), the carrier masts (7), which constitute said obstacles (2), forming elements (4) for masking an angular sector of the flow-measuring probes facing the sensitive element of said probes, wherein at least certain of the flow-measuring probes (1a, ..., 1f) are placed on a circular line (5) and cover complementary angular sectors.

2. Device according to Claim 1, wherein said circular line forms a generatrice of a spherical envelope of the measuring device and defines an equatorial plane of the measuring device.

3. Device according to Claim 2, wherein the masking elements (4) are placed exterior side of said envelope and the sensitive elements are placed interior side of said envelope.

4. Device according to Claim 1, 2 or 3, **characterized in that** it includes four flow-measuring probes that are placed at 90° from one another on said circular line (5) in order to define four cardinal points.

5. Device according to Claim 1, 2 or 3, **characterized in that** it includes six flow-measuring probes that are placed at 60° from one another on said circular line (5)in order to produce at least two measurement sectors upwind of the flow and two measurement sectors downwind of the flow.

6. Device according to Claim 2, **characterized in that** it includes four sensors on said generatrice forming said equatorial plane of the device and four sensors on at least one tropic of the envelope.

7. Device according to Claim 2 or 3-6 when it depends on Claim 2, **characterized in that** it furthermore includes measuring probes (8a, 8b) that are placed on a polar axis of the envelope, said generatrice defining an equatorial plane of the measuring device.

8. Device according to Claim 2 or 3-7 when it depends on Claim 2, wherein the carrier masts (7) consist of ring segments distributed on equidistant meridians of the spherical volume defined by the envelope of the device.

9. Device according to one of the preceding claims, wherein the flow-measuring probes (1a, ..., 1f) are placed on carrier masts in the shape of polar rings defining a spherical volume, the probes being placed on the interior of the rings on the equatorial line of the spherical volume.

10. Device according to any one of the preceding claims, **characterized in that** it includes a sensor of pressure and of temperature.

11. Device according to one of the preceding claims, wherein the temperature sensors are probes comprising resistive temperature-sensitive elements that are operated in a constant-current, constant-temperature or constant-temperature-difference mode.

12. Method for measuring direction, sign and speed characteristics of a flow of gaseous fluid by means of a device according to any one of the preceding claims, **characterized in that** it includes compiling a table of data recorded in a phase of calibration of each sensor consisting in placing the device in a wind tunnel and in scanning each and every incidence in three dimensions with a given increment size and a step of comparing the responses of the flow-measuring probe sensors with one another and with the data of the table by means of processor in order to evaluate simultaneously the three components of the flow speed.

13. Method according to Claim 12, wherein all of the measurements carried out by the devices for measuring potential are digitized and transmitted to said processor which compares the values generated by the sensors.

14. Method according to Claim 12, wherein, the sensors being thermistors, two components of the flow speed are determined by seeking the thermistor the temperature of which is highest.

15. Method according to one of Claims 12 to 14, wherein the characteristics of the flow are determined using one or more algorithms (sign, direction and modulus) on the basis of the responses returned by the measuring probes.

16. Method according to one of Claims 12 to 15, wherein the angle of incidence of the air current on the device is determined by means of a computational process that compares the information returned by the sensors with the table of recorded data.
